# EUROPEAN PATENT APPLICATION

(11) **EP 4 660 080 A1**
(43) Date of publication of application: **10.12.2025**
(21) Application number: 24180707.2
(22) Date of filing: 07.06.2024
(51) Int. Cl.: B64D 37/06, B64D 37/30

(54) **FUEL TANK OF OR FOR AN AIRCRAFT, AND AIRCRAFT WITH FUEL TANK**

(71) Applicant: AIRBUS Operations GmbH, 21129 Hamburg (DE)
(72) Inventor: Siemann, Martin, 21129 Hamburg (DE)

(57) **Abstract**

Disclosed is a fuel tank 100, 100', 100'', 100‴ of or for an aircraft 1000. The fuel tank comprises an inner hull 1, 1', 1", 1‴ bordering a tank space S to be filled with a fuel, and an outer hull 2, 2', 2'', 2‴ encasing the inner hull 1, 1', 1'', 1‴ with an insulation layer 3, 3', 3'', 3‴ in-between, the insulation layer thus separating the outer hull 2, 2', 2'', 2‴ from the inner hull 1, 1', 1'', 1'''. The fuel tank further comprises an internal reinforcement structure 4, 4', 4'', 4‴ extending from the inner hull into the tank space S, the reinforcement structure comprising at least one truss. The reinforcement structure may in particular further comprise at least one anti-sloshing wall 11₁, 11₂, 11₃, 11₄, 11₅, 11₆.

Further disclosed is an aircraft 1000 comprising such fuel tank 100, 100', 100", 100‴.

## Description

The present invention concerns a fuel tank of or for an aircraft, which fuel tank in particular may be a hydrogen tank. The invention further concerns an aircraft comprising such fuel tank.

Aircraft typically comprise one or more fuel tank/s containing a fuel to be supplied to the aircraft's one or more propulsion engines and possibly, if installed, to an auxiliary power unit such as, e.g., a turboshaft engine and/or a fuel cell etc. Different positions are known for the tanks, depending on a respective type and design of the aircraft.

Conventionally, the respective fuel may be an aviation gasoline or a jet fuel, for instance. In order to achieve a considerable emission reduction or even a zero emission, alternative propulsion systems for aircraft have been researched for. In this respect, hydrogenelectric aircraft engines, any propulsion engine which includes piston engines, turbine engines of any architecture, and fuel cell powered electrical propulsion motors have emerged as a promising possibility, for instance. In particular, turbo fans and fuel cells/ electric engines respectively driven with hydrogen have been developed as aircraft engines. In either case, considerable space (volume) is needed, in the aircraft, for the hydrogen storage even in the liquid state thereof. Therein, to minimize lost energy due to boil-off, a tank with a large capacity and an advantageous surface-to-volume ratio is advantageous.

It is an object of the present invention to provide for an improved fuel storage in an aircraft.

The object is achieved by a fuel tank according to claim 1 and by an aircraft according to claim 8. Advantageous embodiments are disclosed in the dependent claims, the description, and the figures.

A fuel tank according to the present invention is devised as a fuel tank of or for an aircraft, i.e., a fuel tank devised to contain fuel to be supplied to a propulsion engine of the aircraft. The fuel tank may in particular be a hydrogen tank, i.e., a pressure vessel configured to contain liquefied hydrogen (LH2).

The fuel tank according to the present invention comprises an inner hull bordering a tank space to be filled with a fuel, and an outer hull encasing the inner hull. The inner hull and the outer hull are separated from each other by an insulation layer. In particular, the outer hull and the inner hull are preferably spaced away from each other (thus, without contact). As is to be understood, the term "insulation" in this document always refers to thermal insulation.

The fuel tank according to the present invention further comprises a reinforcement structure which extends from the inner hull into the tank space. The thus internal reinforcement structure comprises at least one truss, i.e., a tree-like, stiff branched structure comprising at least two beams which each are configured for a load transfer and which are connected to each other in a node from which they extend in different directions.

By virtue of the reinforcement structure, the fuel tank according to the present invention has an inner hull exhibiting an improved stability. Moreover, the reinforcement structure provides one or various crash load path/s running through the tank space, in addition to conventional load paths running, along the outer hull, around the tank space. Said load paths running through the fuel tank may be activated in a potential crash scenario as detailed below.

Accordingly, the present invention facilitates a function integration of implementing a high stability of the fuel tank and an efficient load transfer, thus providing for a reduction of risks resulting from a potential crash. As is to be noted, the consideration of potential crash scenarios is of special importance with respect to a protection of fuel tanks of aircraft, in particular if these fuel tanks are configured to contain liquefied hydrogen.

According to advantageous embodiments, the insulation layer includes at least one vacuum insulation layer. As is to be understood, such vacuum insulation layer is a hollow extending between the outer hull and the inner hull, the hollow being devoid of matter. In particular, at least a rough vacuum, at least a medium vacuum or at least a high vacuum may be established in the vacuum insulation layer.

Additionally or alternatively, the insulation layer may in particular include at least one foam insulation layer and/or at least one multi-layer insulation layer (being a thermal insulation material made of multiple layers of films such as metal coated plastic sheets, as known in the art).

The at least one truss may in particular comprise at least one beam which comprises at least one portion having an angled cross section (such as an I-shaped, an H-shaped-, a T-shaped, or an L-shaped cross section) and/or at least one hollow portion (which may be shaped as a round or rectangular tube, for instance). By including such beams, the at least one truss can have a particularly light weight and nevertheless a high bending stiffness.

The at least one truss of the reinforcement structure may be configured as a planar truss. In particular, the reinforcement structure may comprise at least two planar trusses which are parallel to each other.

According to advantageous embodiments, the at least one truss may comprise at least one triple of (connected) beams whose longitudinal directions span a three-dimensional space. More specifically, the reinforcement structure may comprise at least one space frame truss/ 3D truss. Such truss shapes facilitate a particularly advantageous load distribution in case of a potential crash of the aircraft.

Considered with regard to a designated orientation of the fuel tank when installed in the aircraft, the reinforcement structure may advantageously connect a ceiling of the inner hull with a bottom thereof, and/or a front portion of the inner hull (facing in a designated direction of flight of the aircraft) with a rear portion (facing opposed to the designated direction of flight) thereof. In particular, the at least one truss comprised by the reinforcement structure may cross a centre region of the tank space. Thereby, particularly advantageous load paths can respectively be generated.

According to advantageous embodiments of the present invention, the reinforcement structure comprises at least one (in particular planar, such as at least partially flat and/or at least partially bulged) anti-sloshing wall. For instance, the reinforcement structure may comprise, as said at least one anti-sloshing wall, at least one pierced and/or at least one unpierced baffle.

As is to be noted, the term "sloshing" refers to the movement of liquid inside another (e.g., moving) object. The risks resulting from such sloshing are considerable in particular for large fuel tanks such as fuel tanks configured to contain liquefied hydrogen for fuelling an aircraft's engine.

The at least one anti-sloshing wall thus at least partially separates the tank space into different zones and thereby serves to reduce sloshing effects. As a consequence, dynamic loading resulting from the sloshing and acting on the tank itself (so-called "local loading") and/or on a tank support structure (so-called "global loading") can be lessened, which serves to avoid adverse impacts on the fuel tank, equipment, and performance of the aircraft. Moreover, an amount of mixing of differently tempered or even differently phased fuel within the tank space such as cooler liquid from the bottom of the tank space and a gas/ vapor formed above the liquid can be reduced, thereby decreasing recondensation and thermodynamic challenges.

Said at least one anti-sloshing wall may be arranged so as to at least partially fill a respective interspace between respective beams of the truss. For example, it may be at least partially edged by respective beams of the truss. The at least one anti-sloshing wall may be attached to at least one beam of the truss. Additionally or alternatively, the at least one anti-sloshing wall may be formed as a two-dimensional (e.g., flat) extension of a respective beam of the at least one truss, such as being monolithically integrated into such beam.

The reinforcement structure of such embodiments thus integrates the functions of improved stability and reduction of sloshing. Accordingly, a dedicated additional structure becomes dispensable, such that the weight of the fuel tank and a space required for its installation can be saved.

According to advantageous embodiments of the present invention, the fuel tank comprises a tank-side support system configured to serve (e.g., in combination with a shell-side support system) to support the fuel tank in a shell of the aircraft.

The tank-side support system may preferably be attached to and/or integrated in the outer hull of the fuel tank. It may comprise a strut system and/or at least one annular or disc-shaped mount element, for instance.

In particular, when the outer hull of the fuel tank comprises a tubular wall which is closed, at its opposite ends, by respective domes, the tank-side support system may be configured to implement a polar support concept (according to which the fuel tank is supported at a centre region of at least one of the domes), a dome support concept (according to which the fuel tank is supported at a periphery of at least one of the domes) and/or a continuous support concept (according to which the fuel tank is supported at several points along a length of the tubular wall).

In these embodiments, the reinforcement structure (in particular, the at least one truss thereof) may preferably be connected to the inner hull at one or various point/s (and/or even along one or various line/s) which face/s the tank-side support system (in a direction outwards the fuel tank) with a respective gap and/or energy absorbing structure in-between.

Due to the gap/s and/or energy absorbing structure/s between the reinforcement structure and the tank-side support system, the crash load path/s become/s active only if a predefined displacement depending on a respective crash load level is exceeded: In normal operation, the reinforcement structure does not transfer loads between the fuel tank and the shell. In case of a potential crash, however, the gap/s may be closed and/or the energy absorbing structure may be compressed, respectively, due to a relevant deformation of the inner hull and/or the outer hull, such that the reinforcement structure is activated to transfer crash loads.

As a consequence, in these embodiments, the risks resulting from a deformation of the inner hull and/or the outer hull are effectively controlled. In particular, in case a tank wall (formed by the outer hull, the inner hull and the insulation layer in-between) of the fuel tank has a non-circular cross section/s and/or a longitudinal shape, the reinforcement structure of said embodiments can advantageously reduce bending loads arising, due to the non-circular shape, in the tank wall.

The reinforcement structure of a fuel tank according to such embodiments thus integrates the functions of improved stability of the inner hull and absorption of energy in a potential crash scenario. Accordingly, a dedicated additional structure becomes dispensable, such that a weight of the fuel tank and a space required for its installation can be saved. In particular, in embodiments further comprising at least one anti-sloshing wall as mentioned above, a comprehensive, threefold function integration is provided.

An aircraft according to the present invention comprises a shell and at least one fuel tank according to the present invention, wherein the at least one fuel tank is supported within the shell. In particular, the shell may preferably belong to a fuselage of the aircraft, and the at least one fuel tank may be installed in an unpressurised aft portion of the fuselage. The aircraft may further comprise a propulsion engine and a supply system configured to supply fuel from the at least one fuel tank to the propulsion engine. In particular, such engine may be a hydrogen-powered aircraft engine.

According to advantageous embodiments of the present invention, the outer hull of the at least one fuel tank has a tubular wall whose opposite ends are closed by respective tank domes. The aircraft may then further comprise a shell-side support system supporting the at least one fuel tank, in the shell, at a centre region of at least one of the tank domes (thus implementing a polar support concept as mentioned above), at a peripheral region of at least one of the tank domes (thus implementing a dome support concept as mentioned above), and/or at several positions along a length of the tubular wall of the outer hull (thus implementing a continuous support concept as mentioned above). In embodiments in which the fuel tank comprises a tank-side support system as mentioned above, said shell-side support system may preferably be configured to act in conjunction with the tank-side support system.

In these embodiments, the above-mentioned advantageous load paths may be activated, through the shell-side support system, in a potential scenario of a crash of the aircraft.

In what follows, preferred embodiments of the present invention are explained with respect to the accompanying drawings. As is to be understood, the various elements and components are depicted as examples only, may be facultative and/or combined in a manner different than that depicted. Reference signs for related elements are to some extend used comprehensively and not necessarily defined again for each figure, and the same holds for evident analogies between the figures.

Shown are schematically in
- Fig. 1:: a fuel tank according to a first exemplary embodiment of the present invention;
- Fig. 2a:: a fuel tank according to a second exemplary embodiment of the present invention in a sectional view;
- Fig. 2b:: a fuel tank according to a third exemplary embodiment of the present invention in a sectional view; and
- Fig. 3:: an aircraft according to an exemplary embodiment of the present invention.

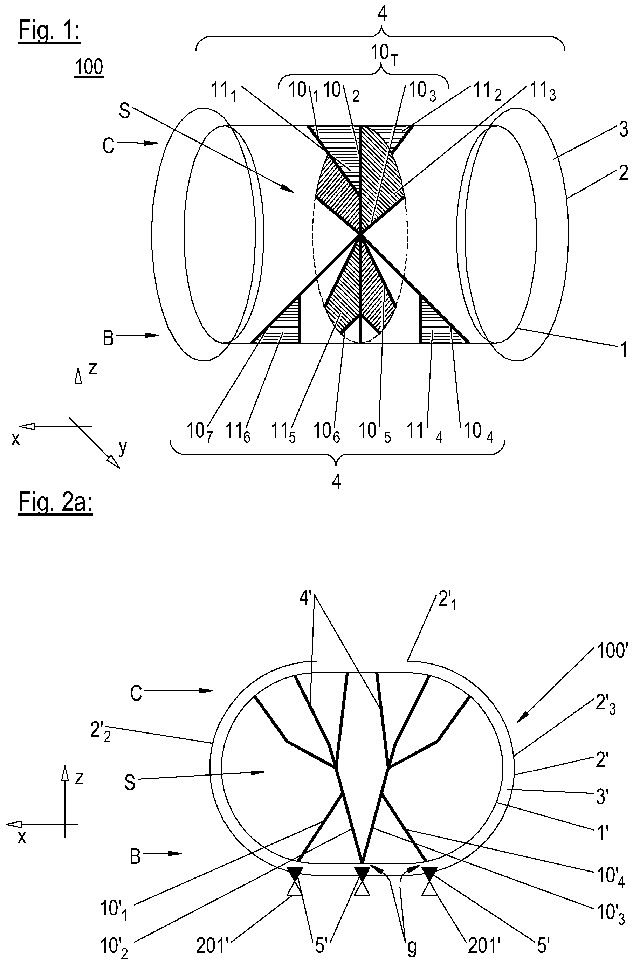

Figure 1 illustrates an exemplary embodiment of a fuel tank 100 according to the present invention in a perspective view. The fuel tank 100 may in particular be a hydrogen tank, i.e., a pressure vessel configured to contain liquefied hydrogen.

The fuel tank 100 comprises an inner hull 1 which borders a tank space S to be filled with the fuel (e.g., liquefied hydrogen), and an outer hull 2 encasing the inner hull 1. In the exemplary case shown, the inner hull 1 and outer hull 2 each comprise a respective tubular wall which in this case is cylindrically shaped and whose opposed ends are closed by respective domes.

An insulation layer 3 separates the inner hull 1 and the outer hull such that these do not contact each other. The insulation layer 3 may in particular be a vacuum insulation layer. Additionally or alternatively, the insulation layer may in particular include at least one foam insulation layer and/or at least one multi-layer insulation layer.

To provide an insight into the fuel tank and thereby demonstrate the present invention, the inner hull 1, the outer hull 2, and the insulation layer 3 are illustrated, in Figure 1, as being transparent.

The fuel tank 100 further comprises a reinforcement structure 4 which extends from the inner hull 1 into the tank space S. The reinforcement structure 4 comprises a truss formed by a plurality of beams arranged in a tree-like manner in which some of the beams are connected to each other in respective nodes. For clarity reasons, only beams 10₁, 10₂, 10₃, 10₄, 10₅, 10₆, 10₇ are referenced in Figure 1.

In the exemplary embodiment shown in Figure 1, the truss is three-dimensional. It in particular comprises various triples of beams whose longitudinal directions span a three-dimensional space. To provide for a clear arrangement, only the triple 10_{T} formed by beams 10₁, 10₂, 10₃ is referenced in Figure 1. As apparent therefrom, with respect to the coordinate system indicated, beams 10₁, 10₂ together span a first plane which is parallel to the x-z-plane, and beams 102, 103 together span a second plane which is orthogonal to said first plane and parallel to the y-z-plane.

Moreover, the reinforcement structure 4, in particular the truss thereof connects a ceiling C of the inner hull 1 with a bottom B thereof. Thereby, a particularly high stability of the inner hull 1 can be achieved.

The reinforcement structure 4 in the inner space S of the fuel tank 100 illustrated in Figure 1 further comprises a plurality of anti-sloshing walls 11₁, 11₂, 11₃, 11₄, 11₅, 11₆ which in the present case fill respective interspaces between associated beams of the truss. For instance, anti-sloshing wall 11₁ fills an interspace between beams 10₁, 10₂, while anti-sloshing wall 11₃ fills an interspace between beams 10₃, 10₂. In the present example, the anti-sloshing walls 11₁, 11₂, 11₃, 11₄, 11₅, 11₆ are further connected, along respective lines, to an inner surface of the inner hull 1.

By means of the truss and the anti-sloshing walls 11₁, 11₂, 11₃, 11₄, 11₅, 11₆, the reinforcement structure 4 combines the functionalities of increasing the stability of the inner hull 1 and reducing dynamic loading which results from the sloshing and acts on the fuel tank 100 itself and/or on a tank support structure (not shown in Figure 1) .

Moreover, in case of a potential crash of an aircraft (not shown) comprising the fuel tank 100, the reinforcement structure 4 provides advantageous crash load paths in particular if the fuel tank is supported, in a shell of the aircraft, by way of a continuous support concept (not shown in Figure 1).

Figure 2a illustrates such continuous support concept implemented for a fuel tank 100' according to a further exemplary embodiment of the present invention. Similar to the fuel tank 100 illustrated in Figure 1 and described above, the fuel tank 100' comprises an inner hull 1', an outer hull 2', and an insulation layer 3' separating the inner hull 1' from the outer hull 2'. Therein, the outer hull 2' of the fuel tank 100' comprises a cylindrically shaped tubular wall 2'₁ whose opposite open ends are closed by respective domes 2'₂, 2'₃, and the inner hull 1' is shaped analogously.

The fuel tank 100' further comprises a reinforcement structure 4' extending from the inner hull 1' into a tank space S of the fuel tank 100', the reinforcement structure 4' comprising a truss and connecting a bottom B of the inner hull 1' with a ceiling C thereof.

Analogously to the embodiment shown in Figure 1, the reinforcement structure 4' may preferably further comprise at least one anti-sloshing wall (not visible in Figure 2a).

A tank-side support system 5' of the fuel tank 100' comprises a strut system with various struts which are attached to and/or integrated in the outer hull 2' at respective points along a length of the tubular wall 2'₁ of the outer hull 2' and which are respectively supported by a shell-side support system 201'. Therein, towards the inner hull 1', the struts of the support system 5' face, with a respective gap g in-between, respective connection point/s (or even connection lines running in a direction orthogonal to an image plane, thus not visible in Figure 2a) at which the reinforcement structure 4' is connected, with respective ends of beams 10'₁, 10'₂, 10'₃, 10'₄ of its truss, to the inner hull 1'.

In combination with the shell-side support system 201' and the tank-side support system 5', the reinforcement structure 4' thereby provides particularly advantageous load paths in a potential crash scenario. These load paths become active only in case of a sufficient deformation of the outer hull 2' and/or of the inner hull 1' causing the gaps g to be closed. Moreover, they run through the tank space S and thereby provide a particularly efficient load transfer in addition to conventional load transfers running, along the outer hull, around the tank space.

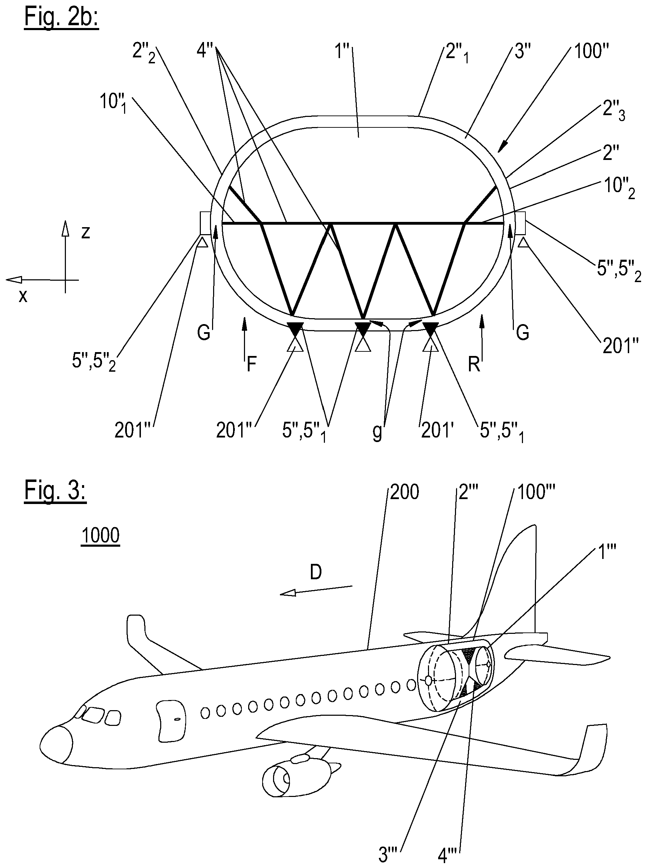

Figure 2b shows, in a view similar to that of Figure 2a, a fuel tank 100'' according to a further embodiment of the present invention. The fuel tank 100'' comprises an inner hull 1", an outer hull 2", and an insulation layer 3" separating the inner hull 1" from the outer hull 2". Therein, the outer hull 2'' of the fuel tank 100'' comprises a cylindrically shaped tubular wall 2"₁ whose opposite open ends are closed by respective domes 2"₂, 2"₃, and the inner hull 1'' is shaped analogously.

The fuel tank 100'' further comprises a reinforcement structure 4'' extending from the inner hull 1" into a tank space S of the fuel tank 100'', comprising a truss, and in this embodiment connecting a front portion F of the inner hull 1" with a rear portion R thereof; as is to be understood, the front portion and the rear portion are defined with respect to a devised installation of the fuel tank 100'' in an aircraft and a designated direction of flight thereof.

Analogously to the embodiment shown in Figure 1, the reinforcement structure 4" may preferably further comprise at least one anti-sloshing wall (not visible in Figure 2b).

As further illustrated in Figure 2b, the fuel tank 100'' comprises a tank-side support system 5'' which in this case comprises as a strut system 5"₁ and mount elements 5"₂.

The strut system 5"₁ comprises various struts which are attached to and/or integrated in the outer hull 2" at respective points along a length of the tubular wall 2"₁ of the outer hull 2". Therein, the struts are respectively supported by first components of a shell-side support system 201". Towards the inner hull 1", the struts of the strut system 5"₁ face, with respective gaps g in-between, respective connection point/s (or even connection lines running in a direction orthogonal to an image plane, thus not visible in Figure 2b) at which the reinforcement structure 4'' is connected to the inner hull 1".

The mount elements 5"₂ each are attached to a respective one of the domes 2"₂, 2"₃ of the outer hull 2", and they are respectively supported by second components of the shell-side support system 201''. Towards the inner hull 1", the mount elements 5"₂ face, with a respective gap G in-between, respective connection points at which the reinforcement structure 4" (namely, beams 10"₁, 10"₂ of its truss) is connected to the inner hull 1".

Accordingly, a combination of both a continuous support concept and a polar support concept is implemented by the fuel tank 100'' shown in Figure 2b.

Analogous to the case of the fuel tank 100' shown in Figure 2a, the load paths provided by the reinforcement structure 4" in combination with the shell-side support system 201" and the tank-side support system 5'' shown in Figure 2b become active only in case of a sufficient deformation of the outer hull 2'' respectively causing the gaps g, G to be closed.

Figure 3 illustrates an aircraft 1000 according to an embodiment of the present invention with its designated direction D of flight. The aircraft 1000 comprises a shell 200 and, installed therein, a fuel tank 100‴ according to an embodiment of the present invention. As indicated in Figure 3, the fuel tank 100‴ comprises an inner hull 1‴, an outer hull 2‴ encasing the inner hull 1‴ and separated therefrom by an insulation layer 3‴, and a reinforcement structure 4‴ which extends from the inner hull 1‴ into the tank space and which comprises at least one truss and at least one anti-sloshing wall. The fuel tank 100‴ may be supported, within the shell 200, by implementing a continuous support concept, a polar support concept and/or a dome support concept (not shown in Figure 3).

Disclosed is a fuel tank 100, 100', 100", 100‴ of or for an aircraft 1000. The fuel tank comprises an inner hull 1, 1', 1", 1‴ bordering a tank space S to be filled with a fuel, and an outer hull 2, 2', 2", 2‴ encasing the inner hull 1, 1', 1", 1‴ with an insulation layer 3, 3', 3", 3‴ in-between, the insulation layer thus separating the outer hull 2, 2', 2", 2‴ from the inner hull 1, 1', 1", 1‴. The fuel tank further comprises an internal reinforcement structure 4, 4', 4", 4‴ extending from the inner hull into the tank space S, the reinforcement structure comprising at least one truss. The reinforcement structure may in particular further comprise at least one anti-sloshing wall 11₁, 11₂, 11₃, 11₄, 11₅, 11₆.

Further disclosed is an aircraft 1000 comprising such fuel tank 100, 100', 100", 100‴.

### Reference signs

- 1, 1', 1", 1‴: inner hull
- 2, 2', 2", 2‴: outer hull
- 2'₁, 2"₁: tubular wall of outer hull
- 2'₂, 2'₃, 2"₂, 2"₃: dome of outer hull
- 3, 3', 3" , 3‴: insulation layer
- 4, 4', 4", 4‴: reinforcement structure
- 5', 5'': tank-side support system:
- 5"₁: strut system of tank-side support system 5"
- 5"₂: mount element of tank-side support system 5"

- 10₁, 10₂, 10₃, 10₄, 10₅, 10₆, 10₇: beam
- 10_{T} triple: of beams spanning three-dimensional space
- 10'₁, 10'₂, 10'₃, 10'₄: beam
- 10"₁, 10"₂: beam
- 11₁, 11₂, 11₃, 11₄, 11₅, 11₆: anti-sloshing wall

- 100, 100', 100", 100‴: fuel tank

- 200: shell
- 201', 201'': shell-side support system

- 1000: aircraft

- B: bottom of inner hull
- C: ceiling of inner hull
- D: designated direction of flight
- F: front portion of inner hull
- g: gap
- G: gap
- R: rear portion of inner hull
- S: tank space

## Claims

1. Fuel tank (100, 100', 100", 100‴) of or for an aircraft (1000), the fuel tank comprising
- an inner hull (1, 1', 1", 1‴) bordering a tank space (S) to be filled with a fuel,
- an outer hull (2, 2', 2", 2‴) encasing the inner hull (1, 1', 1", 1‴),
- an insulation layer (3, 3', 3'', 3''') separating the outer hull (2, 2', 2", 2‴) from the inner hull (1, 1', 1", 1‴), and
- a reinforcement structure (4, 4', 4", 4‴) extending from the inner hull into the tank space (S), the reinforcement structure comprising at least one truss.

2. Fuel tank according to claim 1, wherein the reinforcement structure (4, 4', 4'', 4‴) comprises at least one anti-sloshing wall (11₁, 11₂, 11₃, 11₄, 11₅, 11₆).

3. Fuel tank according to one of claims 1 or 2, wherein the at least one truss comprises at least one beam which is at least partially hollow.

4. Fuel tank according to one of the preceding claims, wherein the at least one truss comprises at least one triple (10_{T}) of beams (10₁, 10₂, 10₃) whose longitudinal directions span a three-dimensional space.

5. Fuel tank according to one of the preceding claims, wherein with regard to a designated orientation of the fuel tank (100, 100', 100", 100‴) in the aircraft (1000), the reinforcement structure (4, 4', 4", 4‴) connects
- a ceiling (C) of the inner hull (1, 1', 1‴) with a bottom (B) thereof and/or
- a front portion (F) of the inner hull (1") with a rear portion (R) thereof.

6. Fuel tank according to one of the preceding claims, further comprising a tank-side support system (5', 5") by which the fuel tank (100', 100") is configured to be supported in a shell (200) of the aircraft (1000),
wherein the reinforcement structure (4', 4") is connected to the inner hull (1', 1") at one or various connection point/s and/or along one or various connection line/s respectively facing the tank-side support system (5', 5") with a respective gap (g, G) and/or energy absorption structure in-between.

7. Fuel tank according to one of the preceding claims which is configured as a pressure vessel for containing liquefied hydrogen.

8. Aircraft (1000) comprising a shell (200) and, supported therein, at least one fuel tank (100, 100', 100", 100‴) according to one of the preceding claims.

9. Aircraft according to claim 8, wherein the outer hull (2', 2'') of the at least one fuel tank has a tubular wall (2'₁, 2"₁) whose opposite ends are closed by respective domes (2'₂, 2'₃, 2"₂, 2"₃), the aircraft further comprising a shell-side support system (201', 201") supporting the at least one fuel tank
- at a centre region of at least one of the domes (2'₂, 2'₃, 2"₂, 2"₃),
- at an exterior region of at least one of the domes;
and/or
- at several positions along the tubular wall (2'₁, 2"₁) of the outer hull.

10. Aircraft according to claim 9, wherein the reinforcement structure (4', 4") is connected to the inner hull (1', 1") at one or various point/s and/or along one or various line/s respectively facing the shell-side support system (201', 201").
